# EUROPÄISCHE PATENTANMELDUNG

(11) **EP 2 163 522 A1**
(43) Veröffentlichungstag der Anmeldung: **17.03.2010**
(21) Anmeldenummer: 09011706.0
(22) Anmeldetag: 14.09.2009
(51) Int. Cl.: C02F 1/00, A01K 63/04

(54) **Filtervorrichtung für Teiche und dergleichen Gewässer**

(30) Priorität: 15.09.2008 DE 202008012288 U
(71) Anmelder: Held GmbH, 75050 Gemmingen (DE)
(72) Erfinder: Bräuchle, Tino, 74906 Bad Rappenau (DE); Gäng, Norbert, Dr.rer.nat., 88422 Bad Buchau (DE); Gousset, Patrice, 74193 Schwaigern-Stetten (DE); Held, Gerhard, 75050 Gemmingen (DE)
(74) Vertreter: Müller, Hans

(57) **Zusammenfassung**

Eine Vorrichtung (12) zum Filtern eines Gewässers (10) besitzt eine Filteranordnung (16), durch die im Filterbetrieb mittels einer Pumpe (14) Wasser in einer ersten Durchflussrichtung (36) hindurchdrückbar und in das Gewässer (10) einleitbar ist und durch die hindurch im Rückspülbetrieb (44) mittels einer Pumpe (14) Wasser aus dem Gewässer (10) heraus in einer zweiten, entgegengesetzten Durchflussrichtung (44) hindurchsaugbar ist. Eine Einrichtung (28) zum Abscheiden von Gasen aus dem im Filterbetrieb zu der Filteranordnung geleiteten Wasser ist vorhanden.

## Beschreibung

### TECHNISCHES GEBIET

Die Erfindung betrifft eine Vorrichtung zum Filtern eines Gewässers, wie zum Beispiel eines Schwimm-, Pflanz- oder Fischteiches. Mit der Filteranordnung soll die Wasserqualität des betreffenden Gewässers optimiert werden.

### STAND DER TECHNIK

Es ist bekannt, bei einer Filtervorrichtung der eingangs genannten Art, das durch eine Pumpe über einen Skimmer angesaugte Wasser des entsprechenden Gewässers durch entsprechende Filter hindurchzudrücken und dadurch wieder in das Gewässer zurückzuleiten. Das vom Skimmer angesaugte, verschmutzte Oberflächenwasser kann auf diese Weise gefiltert in das Gewässer zurückgeleitet werden. Von Zeit zu Zeit müssen die Filter gereinigt werden. Dazu wird in umgekehrter Fließrichtung Wasser durch die Filter hindurch angesaugt und über eine Abflussleitung aus dem Gewässer herausgeleitet. Die dadurch entstehende Fehlmenge an Wasser wird durch einen separaten Zufluss von frischem Wasser ausgeglichen. Für diesen Reinigungsbetrieb kann eine separate, vom Filter zurückführende Saugleitung vorgesehen werden. Gemäß der EP-A-1 038 436 ist es bekannt, eine Verbindungsleitung zwischen der zum Filter hinführenden Druckleitung und der vom Skimmer zur Pumpe führenden Saugleitung vorzusehen. Durch eine solche Verbindungsleitung können dann viele Meter an Leitungen eingespart werden. Diese Einsparung ist umso größe, je weiter die Filter von der Pumpe entfernt in einem Gewässer platziert sind.

Sowohl beim Filterbetrieb als auch insbesondere bei Montagearbeiten lässt es sich nicht vermeiden, dass nicht nur Wasser sondern auch Luft mit in das Leitungssystem hineingesaugt und dann auch durch die Filter wieder nach außen herausgedrückt wird. Sofern der Filter als biologischer Filter mit beispielsweise mehreren übereinanderliegenden unterschiedlichen Steinschichten ausgebildet ist, die vom durch den Filter herausströmenden Wasser von unten nach oben durchströmt werden, können die durch das Filter mit durchgeschleusten Luftblasen kaminartige sogenannte Filterdurchschüsse hervorrufen. In diesen kaminartigen Bereichen ist der Filter praktisch punktuell zerstört, was eine Reduzierung der wirksamen Filterfläche zur Folge hat.

### DARSTELLUNG DER ERFINDUNG

Ausgehend von diesem Stand der Technik liegt der Erfindung die Aufgabe zugrunde, eine verbesserte Filtervorrichtung der eingangs genannten Art anzugeben.

Diese Erfindung ist durch die Merkmale des Patentanspruches 1 gegeben. Weiterbildungen der Erfindung sind Gegenstand von sich daran anschließenden weiteren Ansprüchen.

Die erfindungsgemäße Filtervorrichtung zeichnet sich insbesondere durch eine zusätzliche Abscheideeinrichtung für Gase aus. Diese Abscheideeinrichtung ist in der zur Filteranordnung hinführenden Druckleitung vorgesehen und ermöglicht ein Entgasen des in der zur Filteranordnung führenden Druckleitung vorhandenen Wassers. Diese Abscheideeinrichtung kann an beliebigen Stellen des Gewässers, außerhalb und innerhalb desselben, und dabei auch vollständig unter Wasser, angeordnet werden. Sie kann auch beispielsweise zusammen mit der die Druckleitung mit Wasser versorgenden Pumpe in einem Schacht untergebracht werden. Wichtig ist, dass die durch die Abscheideeinrichtung ausströmende Luft möglichst nicht durch die im Gewässer angeordneten Filter hindurchströmen und die biologisch wirkenden Filter negativ beeinflussen kann.

Um zu verhindern, dass die Abscheideeinrichtung im Reinigungsbetrieb der Filteranordnung, also im Rückspülbetrieb, mit den im Filter vorhandenen Ablagerungen verschmutzt wird, kann gemäß dem in der Zeichnung dargestellten Ausführungsbeispiel die Abscheideeinrichtung in einer die zum Filter führenden Druckleitung umgebenden Bypassleitung vorgesehen werden. Durch entsprechende Steuereinrichtungen in den verschiedenen Leitungsabschnitten oder auch in der Abscheideeinrichtung kann dann sichergestellt werden, dass die Abscheideeinrichtung nur im Filterbetrieb von Wasser durchströmt wird, im Filter-Reinigungsbetrieb dagegen nicht.

Bei einem in der Zeichnung dargestellten Ausführungsbeispiel besitzt die Abscheideeinrichtung ein Gehäuse mit einer Einfluss- und einer Ausflussöffnung, die sich vorzugsweise gegenüber liegen und im unteren Bereich des Gehäuses angeordnet sind. Der gegenüber den Zufluss- und Abflussleitungen im Querschnitt wesentlich größere Gehäuseinnenraum bewirkt eine starke Verringerung der Strömungsgeschwindigkeit. Dadurch können die in dem Wasser vorhandenen Luftblasen in dem Gehäuse nach oben strömen und an dem Gehäuse heraustreten. Diese Luftblasen sammeln sich an der höchsten Stelle des geschlossenen Gehäuses. Je nach Positionierung des Gehäuses oberhalb oder unterhalb eines Wasserspiegels und je nach Ausbildung des Luftaustrittsventils kann die Luft kontinuierlich oder stoßweise austreten. Nähere Einzelheiten zu solchen Abscheideeinrichtungen sind den Ansprüchen sowie dem Ausführungsbeispiel zu entnehmen. Dies gilt auch für die in dem Gehäuse vorhandenen Umlenkeinrichtungen, um nicht nur eine starke Verminderung der Strömungsgeschwindigkeit des durch das Gehäuse hindurch strömenden Wassers zu erreichen, sondern um durch eine mehrmalige Umlenkung der Wasserströmung auch eine starke Verwirbelung und dadurch das Entweichen von Luftblasen aus dem Wasserstrom zu erleichtern.

Weitere Merkmale und Vorteile der Erfindung sind den in den Unteransprüchen ferner angegebenen Merkmalen sowie dem nachstehenden Ausführungsbeispiel zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine schematische Darstellung eines in einer zu einer Filteranordnung hinführenden Wasserleitung angeordneten Abscheideeinrichtung nach der Erfindung,
- Fig. 2: eine vergrößerte, teilweise Schnittdarstellung der Abscheideeinrichtung nach Fig. 1,
- Fig. 3: eine vergrößerte Schnittdarstellung eines an der Abscheideeinrichtung vorhandenen Entlüfters gemäß einer zweiten Ausführungsform,
- Fig. 4: eine gegenüber Fig. 1 abgewandelte schematische Darstellung.

### WEGE ZUM AUSFÜHREN DER ERFINDUNG

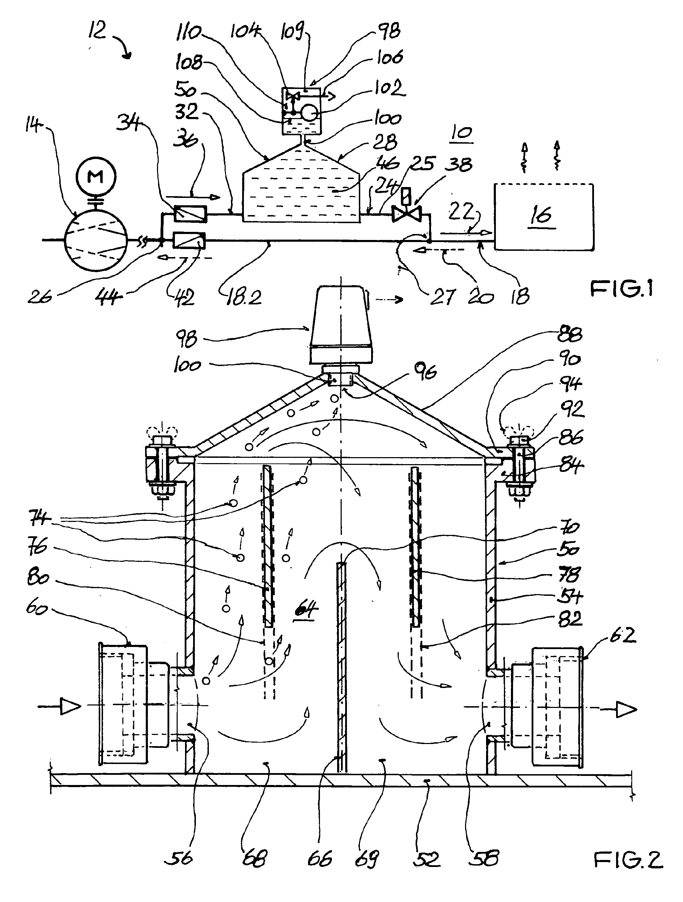

In einem Gewässer 10 ist eine Filtervorrichtung 12 ausschnittsweise in Fig. 1 dargestellt, durch die das von einem Skimmer, der in einer Zeichnung nicht dargestellt ist, mittels einer Pumpe 14 angesaugte Wasser zu einer Filteranordnung 16 hingeleitet und durch die Filteranordnung 16 hindurchgeleitet und wieder in das Gewässer 10 zurückgeführt wird. Die Filteranordnung 16, die aus einem einzigen oder mehreren Filtern bestehen kann, ist über eine Leitung 18 mit der motorisch antreibbaren Pumpe 14 verbunden. Die Pumpe kann entweder als Saug- und Druckpumpe ausgebildet sein. Es ist aber auch möglich, lediglich eine beispielsweise Saugpumpe zu verwenden und durch entsprechende Leitungsführungen dafür zu sorgen, dass durch die Leitung 18 entweder die Filteranordnung 16 im Filterbetrieb in der Strömungsrichtung 20 oder im Reinigungsbetrieb in entgegengesetzter Strömungsrichtung 22 durchströmt wird.

Gemäß Fig. 1 ist zur Leitung 18 eine Bypassleitung 24 vorhanden, die an den Stellen 26, 27 mit der Leitung 18 verbunden ist. In der Bypassleitung 24 ist eine Abscheideeinrichtung 28 für in der Leitung 18 vorhandene Luftblasen vorhanden. In dem pumpenseitigen Leitungsast 32 dieser Bypassleitung 24 ist ein Ventil 34 eingebaut, das nur in Richtung zur Abscheideeinrichtung 28 hin (Pfeil 36) durchströmt werden kann. Zwischen der Pumpe 14 und der einen oder den mehreren Filteranordnungen 16 können auch mehrere Abscheideeinrichtungen 28 vorhanden sein. Diese können gemeinsam oder alternierend betrieben werden.

In der Leitung 18 ist im Bereich zwischen den Stellen 26, 27 in dem dort vorhandenen Leitungsbereich 18.2, ein Ventil 42 vorhanden, das sicherstellt, dass durch den Leitungsbereich 18.2 Wasser nur in von der Filteranordnung 16 wegführenden Richtung (Pfeil 44) strömen kann. Dadurch wird das zur Filteranordnung 16 hinströmende Wasser (Filterbetrieb) durch die Abscheideeinrichtung 28 hindurchgeleitet. Beim Reinigen der Filteranordnung 16 (Rückspülbetrieb) wird das von der Filteranordnung 16 durch die Leitung 18 in Richtung zur Pumpe angesaugte Wasser durch den Leitungsbereich 18.2 und nicht durch die Bypassleitung 24 geleitet. Die bei der Reinigung der Filteranordnung 16 weggesaugten Schmutzpartikel werden also nicht durch die Abscheideeinrichtung 28 hindurchgeleitet und können sich dadurch nicht in derselben ablagern.

In dem Reinigungsbetrieb verhindert das Ventil 34, dass das in der Abscheideeinrichtung 28 vorhandene Wasser 46 durch den Leitungsast 32 hindurch in Richtung zur Pumpe 14 herausgesaugt werden kann. In diesem Fall ist, wie noch weiter unten ausgeführt wird, die Abscheideeinrichtung 28 offen, so dass Luft aus derselben austreten kann. Ohne das Ventil 34 könnte bei diesem Reinigungsbetrieb das in der Umgebung der Abscheideeinrichtung 28 vorhandene Medium, wie beispielsweise Wasser, wenn die Abscheideeinrichtung 28 im Gewässer eingebaut ist, oder Luft, wenn die Abscheideeinrichtung 28 außerhalb des Gewässers platziert ist, durch die Pumpe mit durch den Leitungsast 32 hindurch angesaugt werden.

Ein in dem abströmseitig der Abscheideeinrichtung 28 vorhandener Leitungsast 25 der Bypassleitung 24 angeordnetes Absperrventil 38 verhindert, dass im Reinigungsbetrieb der Filteranordnung 16 (Rückspülbetrieb) das in der Abscheideeinrichtung 28 vorhandene Wasser durch den Leitungsast 25 hindurch in den Leitungsbereich 18.2 und durch denselben hindurch zur Pumpe 16 hin gesaugt werden kann. Das Absperrventil 38 kann händisch und/oder elektrisch betätigt werden.

Die Abscheideeinrichtung 28 besitzt im vorliegenden Beispielsfall ein kreiszylindrisches Gehäuse 50. Der untere Bereich des Gehäuses besitzt eine Fußplatte 52 mit der es beispielsweise auf dem Grund eines Gewässers aufruht. Das Gehäuse 50 kann aber auch mit seiner Fußplatte 52 außerhalb des Gewässers oder an sonstigen beliebigen Stellen innerhalb oder außerhalb des Gewässers platziert sein.

Im unteren Bereich der kreisförmigen Mantelwand 54 des Gehäuses 50 ist eine Einlassöffnung 56 und dieser gegenüberliegend eine Auslassöffnung 58 vorhanden. Diese beiden Öffnungen 56, 58 besitzen einen üblichen Rohrstutzenanschluss 60, 62, über den jeweils eine übliche Schlauch- oder Rohrleitung angeschlossen werden kann.

Der Innenraum 64 des Gehäuses 50 wird in seinem unteren Bereich von einer im vorliegenden Beispielsfall einzigen Querwand 66, die im vorliegenden Fall mittig angeordnet ist, in zwei Innenbereiche 68, 69 aufgeteilt. Diese Querwand 66 ist in zumindest schwer wasserdurchlässiger Art und Weise an dem Boden angeschlossen. Die Querwand 66 hat etwa 50 bis 70 Prozent der Höhe der kreiszylindrischen Mantelwand 54. Die Querwand 66 bewirkt, dass das durch die Einlassöffnung 56 in das Innere des Gehäuses 50 einströmende Wasser über den oberen Rand 70 der Querwand 66 hinwegströmen muss, bevor es aus der Auslassöffnung 58 wieder aus dem Gehäuse 50 herausströmen kann. Diese gezwungene Umlenkung zusammen mit dem gegenüber den Einlassöffnungen 56 und den Auslassöffnungen 58 wesentlich vergrößertem Innenraumquerschnitt bewirkt eine Reduzierung der Strömungsgeschwindigkeit , so dass die im Wasser mitgerissenen und mitgeführten Luftblasen 74 in dem Gehäuse 50 nach oben strömen können.

Um einen weiteren Wirbel- und Umleitungseffekt im Inneren des Gehäuses 50 zu erzeugen, sind im oberen Bereich der kreiszylindrischen Mantelwand 54 weitere Querwände, im vorliegenden Beispielsfall zwei weitere Querwände 76, 78, angeordnet. Diese Querwände 76, 78 sind im Inneren der Mantelwand 54 längs jeweiliger gestrichelt gezeichneter Nute 80, 82 unterschiedlich weit von der Fußplatte 52 anzuordnen. Dadurch können die beiden Querwände 76, 78 unterschiedlich hoch an der Mantelwand 54 positioniert werden. Die Nuten 80, 82 sind an jeweils einander gegenüberliegenden Innenseiten der Mantelwand 54 vorhanden.

Der obere Rand der Mantelwand 54 besitzt einen umlaufenden Flansch 84. Auf diesem Flansch ist im vorliegenden Beispielsfall mittels mehrerer Verschraubungen 86, von denen in der Fig. 2 zwei Verschraubungen dargestellt sind, ein kreiskegelförmiger Deckel 88 mit dessen umlaufendem unteren Flansch 90 gas- und flüssigkeitsdicht befestigt. Die Verschraubungen 86 besitzen im vorliegenden Fall einen Sechskantkopf 92 oder eine gestrichelt angedeutete obere Flügelkopfmutter 94, die das Festschrauben und das Lösen einer solchen Verschraubung 86 erleichtert. Das den Deckel darstellende Gehäuseteil könnte auch einteilig mit der Mantelwand 54 verbunden, wie beispielsweise verschweißt sein.

Im oberen Bereich des Deckels 88 ist eine zentrale Öffnung 96. Oberhalb dieser Öffnung 96 ist ein Entlüfter 98 platziert. Das Innere dieses ein Kopfteil für das Gehäuse bildenden Entlüfters 98 ist über die zentrale Öffnung und damit über eine Verbindungsleitung 100 mit dem Innenraum 64 des Gehäuses verbunden. Das über die Einlassöffnung 56 und die Auslassöffnung 58 durch das Gehäuse 50 hindurchströmende Wasser strömt durch die Verbindungsleitung 100 auch in den Entlüfter 98 hinein. Auf dem Wasser sitzt ein Schwimmer 102, der über ein Ventil 104, über das in seiner AUF-Stellung Luft über einen Gasauslass 106 aus dem Entlüfter 98 herausgeleitet werden kann, so verbunden, dass bei ansteigendem Wasserspiegel 108 innerhalb des Entlüfters 98 das Ventil 104 in seine ZU-Stellung geschaltet wird.

Die Luftblasen 74, die in dem Gehäuse 50 nach oben steigen, gelangen durch die Verbindungsleitung 100 hindurch in den Innenraum 110 des Entlüfters 98. Diese Luft 109 sammelt sich im oberen Bereich des Entlüfters 98. Sobald die Menge dieser Luft 109 groß genug ist und dadurch der Druck im oberen Bereich des Entlüfters 98 ausreichend groß ist, wird der Schwimmer 102 so weit nach unten gedrückt, dass Luft über das Ventil 104 und den Auslass 106 aus dem Entlüfter 98 entweichen kann. Dadurch sinkt der Druck wieder, der Wasserspiegel 108 steigt wieder und damit auch der Schwimmer 102, so dass sich das Ventil 104 wieder schließt. Auf diese Weise kann stoßweise Luft aus dem Entlüfter 98 austreten. Das Ventil 104 lässt in seinem AUF-Zustand keine Strömung rückwärts in das Innere des Lüfters 98 hinein zu. Das Gehäuse 50 mit seinem Entlüfter 98 kann dadurch auch vollständig unter Wasser platziert werden.

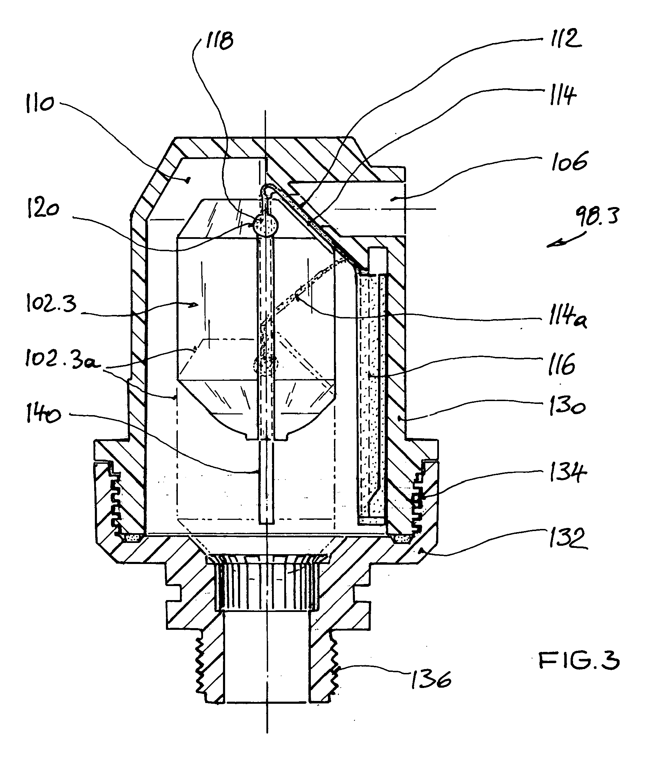

In Fig. 2 ist ein Entlüfter 98.3 gezeigt, bei dem der Schwimmer 102.3 als eine Art Ventilplatte verwendet wird. Der Schwimmer 102.3 ist in Fig. 3 in seiner den Gasauslass 106 verschließenden Stellung gezeigt. Dabei liegt zwischen dem aus Kunststoff ausgebildeten Schwimmer 102.3 und dem Ventilsitz 112 ein flexibles Dichtungsband 114 an, das vom Schwimmer 102.3 gegen den Ventilsitz 112 flüssigkeitsdicht und gasdicht gedrückt wird.

Das Dichtungsband 114 ist an der Innenwand des hohlzylindrischen Entlüfters 98.3 in einer Wandnut 116 verankert. Aus dieser Wandnut 116 ragt das Dichtungsband oben heraus, ist in der Fig. 3 dargestellten Position zwischen Ventilsitz 112 und dem Schwimmer 102.3 eingepresst gehalten und endet mit einer Verdickung 118 in einer Querbohrung 120 im Kopfbereich des Schwimmers 102.3. In seiner abgesenkten Stellung, die strichpunktiert dargestellt ist und die mit dem Bezugszeichen 102.3a in Fig. 3 dargestellt ist, zieht der Schwimmer 102.3 das in seiner Querbohrung 120 einsitzende Ende des Dichtungsbandes 114 nach unten und hebt es von dem Ventilsitz 112 ab. Diese abgesenkte Stellung des Dichtungsbandes ist mit dem Bezugszeichen 114a dargestellt. In dieser abgesenkten Stellung des Ventils 104 kann durch den Gasauslass 106 Luft aus dem Innenraum 110 in das den Entlüfter 98 umgebende Medium strömen. Dieses Medium kann Luft oder Wasser sein. Sofern der Entlüfter 98.3 vollständig eingetaucht in einem Wasser vorhanden ist, wird bei abgesenktem Ventil 102.3 Wasser durch den Gasauslass 106 in das Innere des Entlüfters 98 und damit auch in das Innere der Luftabscheideeinrichtung 28 hineinströmen. Dadurch wird der Wasserspiegel mit dem Schwimmer im Inneren des Entlüfters 98.3 sich nach oben bewegen, bis der Schwimmer schließlich seine in Fig. 3 dargestellte Stellung wieder eingenommen hat. Die im oberen Bereich des Innenraums 110 sich angesammelte Luft wird, wenn der Druck groß genug ist, den Schwimmer 102.3 etwas nach unten drücken und stoßweise dann aus dem Gasauslass 106 austreten. Anschließend wird der Luftdruck im Innenraum 110 wieder absinken, so dass wieder Wasser in den Innenraum 110 eintreten wird. Luftaustritt und Wassereintritt werden sich bei dem vollständig eingetauchten Entlüfter jeweils abwechselnd wiederholen.

Der Entlüfter 98.3 besitzt ein topfartiges Gehäuse 130, das mittels einer Verschraubung 134 lösbar an einem Anschlussstutzen 132 befestigt ist. Der Anschlussstutzen 132 kann seinerseits über einen Schraubstutzen 136 an dem in der Verbindungsleitung 100 (Fig. 1) vorhandenen Auslassstutzen des Gehäuses 50 mit an sich bekannter Schraubtechnik angeschraubt befestigt werden.

Der Schwimmer 102.3 ist in gegenüberliegenden Längsnuten 140 bei seiner Auf- und Abbewegung im Inneren des Gehäuses 130 geführt gehalten.

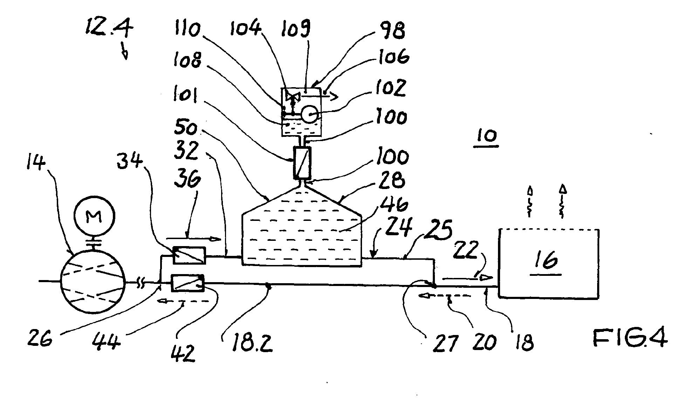

Die in Fig. 4 schematisch dargestellte Filtervorrichtung 12.4 unterscheidet sich von dem in Fig. 1 dargestellten Ausführungsbeispiel dahingehend, dass in der Verbindungsleitung 100 ein Absperrventil 101 eingebaut ist. Dieses Ventil 101 ermöglicht einen Durchfluss nur von der Abscheideeinrichtung 28 nach oben in den Entlüfter 98 hinein. Ein Rückfluss aus dem Entlüfter 98 zurück in die Abscheideeinrichtung 28 ist möglich. Das Absperrventil könnte auch in dem Behälter 28 oder in dem Entlüfter 98, 98.3 integriert vorgesehen werden.

Dieses Ventil 101 ersetzt damit funktionell das in Fig. 1 eingebaute Absperrventil 38, da es verhindert, dass im Reinigungsbetrieb der Filteranordnung 16 (Rückspülbetrieb) Wasser aus der Abscheideeinrichtung 28 durch den Leitungsast 25 der Bypassleitung 24 hindurch zurück, durch den Leitungsbereich 18 hindurch, von der Pumpe 14 angesaugt werden kann.

## Patentansprüche

1. Vorrichtung (12, 12.4) zum Filtern eines Gewässers (10),
- mit einer Filteranordnung (16),
- -durch die im Filterbetrieb mittels einer Pumpe (14) Wasser in einer ersten Durchflussrichtung (36) hindurchdrückbar und in das Gewässer (10) einleitbar ist, und
- -durch die hindurch im Rückspülbetrieb (44) mittels einer Pumpe (14) Wasser aus dem Gewässer (10) heraus in einer zweiten, entgegengesetzten Durchflussrichtung (44) hindurchsaugbar ist,
- **dadurch gekennzeichnet, dass**
- eine Einrichtung (28) zum Abscheiden von Gasen aus dem im Filterbetrieb zu der Filteranordnung geleiteten Wasser vorhanden ist.

2. Vorrichtung nach Anspruch 1,
**- dadurch gekennzeichnet, dass**
- die Abscheideeinrichtung (28) in einer Bypassleitung (24) vorhanden ist, die die Leitung (18) zwischen der Pumpe (14) und der Filteranordnung (16) in einem Leitungsabschnitt (18.2) umgibt,
- Einrichtungen zum Steuern der Durchflussrichtung in der Leitung (18) und in der Bypassleitung (24) so vorhanden sind, dass
- im Filterbetrieb ein Durchfluss nur durch die Bypassleitung (24) hindurch und im Rückspülbetrieb ein Durchfluss nur durch die Leitung (18) und ihren Leitungsabschnitt (18.2) hindurch herstellbar ist.

3. Vorrichtung nach Anspruch 2,
**- dadurch gekennzeichnet, dass**
- anströmseitig der Abscheideeinrichtung (28) in einem Leitungsast (32) der Bypassleitung (24) ein den Durchfluss im Filterbetrieb freigebendes Ventil (34) vorhanden ist,
- in dem von der Bypassleitung (24) umgebenen Leitungsabschnitt (18.2) ein den Durchfluss im Rückspülbetrieb freigebendes Ventil (42) vorhanden ist.

4. Vorrichtung nach Anspruch 2 oder 3,
- **dadurch gekennzeichnet, dass**
- abströmseitig der Abscheideeinrichtung (28), in einem Leitungsast (32) der Bypassleitung (24), ein im Rückspülbetrieb die Bypassleitung (24) verschließendes Absperrventil (38) vorhanden ist.

5. Vorrichtung nach einem der vorstehenden Ansprüche,
- **dadurch gekennzeichnet, dass**
- die Abscheideeinrichtung (28) ein Gehäuse (50) mit zumindest einer Einfluss- und einer Ausflussöffnung (56, 58) aufweist,
- im unteren Bereich des Gehäuses (50) zumindest die Ausflussöffnung (58) vorhanden ist,
- eine Leitungsverbindung (100) zwischen der Abscheideeinrichtung (28) und einer oben im Gehäuse (50) angeordneten Einrichtung (98, 98.3) zum Ausblasen von Gasen wie insbesondere von Luft vorhanden ist.

6. Vorrichtung nach Anspruch 5,
- **dadurch gekennzeichnet, dass**
- in der Leitungsverbindung (100) eine den Durchfluss von der Ausblaseinrichtung (98, 98.3) zurück in die Abscheideeinrichtung (28) versperrendes Ventil (101) vorhanden ist.

7. Vorrichtung nach Anspruch 5 oder 6,
- **dadurch gekennzeichnet, dass**
- die Ausblaseinrichtung (98, 98.3, 104) durch einen Schwimm- oder Auftriebskörper (102, 102.3) so steuerbar ist, dass
- die Ausblaseinrichtung in ihre AUF-Stellung bringbar ist bei ausreichend abgesenktem Schwimm- oder Auftriebskörper (102, 102.3) und in ihre ZU-Stellung bringbar ist bei ausreichend angehobenem Schwimm- oder Auftriebskörper (102, 102.3).

8. Vorrichtung nach einem der vorstehenden Ansprüche,
- **dadurch gekennzeichnet, dass**
- im Gehäuse (50) Einrichtungen zum horizontalen und/oder vertikalen Umleiten der durch das Gehäuse hindurchleitbaren Flüssigkeit vorhanden ist,
- die Umleitungseinrichtungen so vorhanden sind, dass in der Flüssigkeit vorhandene Gasblasen sich im oberen Bereich des Gehäuses sammeln.

9. Vorrichtung nach Anspruch 8,
- **dadurch gekennzeichnet, dass**
- zumindest eine mit dem Boden des Gehäuses (50) vorhandene Umlenkwand (66) den unteren Bereich des Gehäuses in zumindest zwei oben zumindest teilweise offene Innenbereiche (68, 69) unterteilt,
- die Umlenkwand (66) in zumindest schwer Wasser durchlässiger Weise mit dem Boden verbunden ist.

10. Vorrichtung nach Anspruch 8 oder 9,
- **dadurch gekennzeichnet, dass**
- zumindest eine Querwand (76, 78) im mittleren und/oder oberen Bereich des Gehäuses (50) vorhanden ist.

11. Vorrichtung nach Anspruch 10,
- **dadurch gekennzeichnet, dass**
- die zumindest eine Querwand (76, 78) relativ zum Boden (52) des Gehäuses (50) höhenverstellbar vorhanden ist.

12. Vorrichtung nach einem der vorstehenden Ansprüche,
- **dadurch gekennzeichnet, dass**
- das Gehäuse (50) ein sich nach oben in eine Art Laterne verjüngendes Kopfteil besitzt,
- die Ausblaseinrichtung (98, 98.3,104) in dem Kopfteil vorhanden ist.

13. Vorrichtung nach Anspruch 12,
- **dadurch gekennzeichnet, dass**
- ein kreiskegelförmiger Deckel (88) auf dem kreiszylindrischen Mantel (54) des Gehäuses (50) gasdicht befestigbar ist,
- auf der Spitze des Deckels (88) das gas- und flüssigkeitsdurchlässig angescchlossene Kopfteil mit der Ausblaseinrichtung (98, 98.3,104) vorhanden ist.
